# EUROPEAN PATENT SPECIFICATION

(11) **EP 3 757 182 B1**
(45) Date of publication and mention of the grant of the patent: **18.05.2022**
(21) Application number: 20183743.2
(22) Date of filing: 10.07.2015
(51) Int. Cl.: C09D 183/08, C11D 1/72, C11D 3/37, C08J 3/05, C11D 1/66

(54) **HARD SURFACE TREATMENT COMPOSITION**
ZUSAMMENSETZUNG ZUR BEHANDLUNG HARTER OBERFLÄCHEN
COMPOSITION DE TRAITEMENT DE SURFACE DURE

(30) Priority: 05.08.2014 WO PCT/CN2014/083669; 22.09.2014 EP 14185767
(43) Date of publication of application: 30.12.2020
(62) Divisional of application: 15736277.3
(73) Proprietor: Unilever Global IP Limited, Wirral, Merseyside CH62 4ZD (GB); Unilever IP Holdings B.V., 3013 AL Rotterdam (NL)
(72) Inventor: TAO, Qingsheng, Shanghai, 200061 (CN); ZHOU, Yi, Shanghai, 200433 (CN)
(74) Representative: Corsten, Michael Allan

(56) References cited:
- WO-A1-03/035765
- US-A- 5 866 532

## Description

### Field of the invention

The present invention relates to a hard surface treatment composition. In particular, the composition comprises non-ionic surfactant and non-volatile aminosilicone emulsified by emulsifier, wherein the non-volatile aminosilicone accounts for at least 15% by weight of the total non-volatile silicones in the composition, the emulsifier is different from the non-ionic surfactant, the composition has a pH value of no greater than 11.8, and the composition has a pH value of no greater than 8.5 when the non-volatile aminosilicone comprises aminoethylaminopropyl poly(dimethylsiloxane).

### Background of the invention

Droughts, poor irrigation and insufficient plumbing systems are just some of the reasons that cause water shortages in certain regions. Shortages of water can create serious social problems, such as health issues, that are a direct result of inadequate cleaning applications in the absence of sufficient amounts of water.

Efforts for cleaning surfaces with limited amounts of water have been made. Articles with surfaces that are difficult to wet, i.e., articles with hydrophobic surfaces, are therefore desirable since they possess easy-cleaning properties when water is present at low volumes. Moreover, such coatings, subsequent to being applied, yield surfaces that make cleaning easier and faster for the consumer.

There is an increasing interest to develop hydrophobic coatings that result in surfaces displaying high contact angles and/or low sliding angles against water.

However, there are still many difficulties when formulating a hard surface treatment composition which can deliver hydrophobic coating to hard surface. Quite a lot of consumer products contain cleansing surfactant and relatively high concentrations of water which may strongly affect their capability to yield a hydrophobic surface onto a hard surface.

Therefore, the present inventers have recognized that there is a need to develop a composition capable of producing hydrophobic coatings on hard surface even in the presence of cleansing surfactant and relatively high concentrations of water. This invention is therefore directed to a hard surface treatment composition comprising non-ionic surfactant and non-volatile aminosilicone emulsified by emulsifier, wherein the non-volatile aminosilicone accounts for at least 15% by weight of the total non-volatile silicones in the composition, and the emulsifier is different from the non-ionic surfactant. It was surprisingly found such a composition can generate hydrophobic coatings on hard surface. Such hydrophobic coating has the benefits of anti-water mark, oil repellence, and/or easy cleaning of aged soil.

WO 03/035765 discloses quaternary ammonium functional silicone based emulsions which have uses in personal care and other applications.

### Summary of the invention

In a first aspect, the present invention provides a hard surface treatment composition comprising non-ionic surfactant and non-volatile aminosilicone emulsified by emulsifier, wherein the non-volatile aminosilicone accounts for at least 15% by weight of the total non-volatile silicones in the composition, the emulsifier is different from the non-ionic surfactant, the composition has a pH value of no greater than 11.8, and the composition has a pH value of no greater than 8.5 when the non-volatile aminosilicone comprises aminoethylaminopropyl poly(dimethylsiloxane).

In a second aspect, the present invention provides a process for preparing the composition of the present invention, the process comprises the step of emulsifying the non-volatile aminosilicone by emulsifier; and combining the emulsified non-volatile aminosilicone with non-ionic surfactant..

In a third aspect, the present invention provides a method for forming a hydrophobic coating on a surface, the method comprising applying the composition of the present invention to the surface and drying the composition to yield the hydrophobic coating. All other aspects of the present invention will more readily become apparent upon considering the detailed description and examples which follow.

### Detailed description of the invention

Except in the examples, or where otherwise explicitly indicated, all numbers in this description indicating amounts of material or conditions of reaction, physical properties of materials and/or use may optionally be understood as modified by the word "about".

All amounts are by weight of the total composition, unless otherwise specified.

It should be noted that in specifying any range of values, any particular upper value can be associated with any particular lower value.

For the avoidance of doubt, the word "comprising" is intended to mean "including" but not necessarily "consisting of" or "composed of". In other words, the listed steps or options need not be exhaustive.

The disclosure of the invention as found herein is to be considered to cover all embodiments as found in the claims as being multiply dependent upon each other irrespective of the fact that claims may be found without multiple dependency or redundancy.

Where a feature is disclosed with respect to a particular aspect of the invention (for example a composition of the invention), such disclosure is also to be considered to apply to any other aspect of the invention (for example a method of the invention) *mutatis mutandis.*

"Hard surface" of present invention generally refers to any surface in household including the window, kitchen, bathroom, toilet, furniture, or floor including windows, mirrors, sinks, basins, toilet bowls, baths/shower trays, wall tiles, floor tiles, cooker tops, oven interiors, cookware, washing machine drums, cooker hoods, extractor fans. These surfaces, for example, may be made of glass, glazed ceramics, metal, stone, plastics, lacquer, wood, or combination thereof.

"Hydrophobic/hydrophobicity" for the purposes of the present invention is used to describe a molecule or portion of a molecule that is attracted to, and tends to be dissolved by oil (in preference to water), or a surface that has a contact angle against water of greater than 80°, preferably greater than 90°. Such an angle may be measured with a goniometer or other water droplet shape analysis systems, for example by Drop shape analysis system 100 (DSA 100, Krüss) using water droplet of 10 µl at 25 °C.

"Particle size" as used herein refers to particle diameter unless otherwise stated. For polydisperse samples having particulate with diameter no greater than 1 µm, diameter means the z-average particle size measured, for example, using dynamic light scattering (see international standard ISO 13321) with an instrument such as a Zetasizer NanoTM (Malvern Instruments Ltd, UK). For polydisperse samples having particulate with diameter greater than 1 µm, diameter means the apparent volume median diameter (D50, also known as x50 or sometimes d(0.5)) of the particles measurable for example, by laser diffraction using a system (such as a Mastersizer^{™} 2000 available from Malvern Instruments Ltd) meeting the requirements set out in ISO 13320.

"Non-volatile" as used herein means having vapor pressure from 0 to 0.1 mm Hg (13.3 Pa), preferably from 0 to 0.05 mm Hg, more preferably from 0 to 0.01 mm Hg at 25 °C. "Viscosity" as used herein means kinematic viscosity at 25°C and is reported as centiStokes (1 cSt = 1 mm2•s-1). Viscosity of fluids such as silicone can be determined, for example, by the relevant international standard, such as ISO 3104.

The non-ionic surfactant used in the invention comprises alkyl polyglucosides, more preferably C₅-C₂₀ alkyl polyglucosides.

Further non-ionic surfactants may be present such as:
- compounds produced by the condensation of simple alkylene oxides with an aliphatic or alkyl-aromatic hydrophobic compound having a reactive hydrogen atom;
- tertiary amine oxides of structure R¹R²R³N-O, where R¹ is an alkyl group of 8 to 20 carbon atoms and R² and R³ are each alkyl or hydroxyalkyl groups of 1 to 3 carbon atoms, e.g. dimethyldodecylamine oxide;
- tertiary phosphine oxides of structure R¹R²R³P-O, where R¹ is an alkyl group of 8 to 20 carbon atoms and R² and R³ are each alkyl or hydroxyalkyl groups of 1 to 3 carbon atoms, for instance dimethyl-dodecylphosphine oxide;
- dialkyl sulphoxides of structure R¹R²S=O, where R¹ is an alkyl group of from 10 to 18 carbon atoms and R² is methyl or ethyl, for instance methyl-tetradecyl sulphoxide;
- fatty acid alkylolamides, such as the ethanol amides;
- alkylene oxide condensates of fatty acid alkylolamides;
- alkyl mercaptans;
or a mixture thereof.

Preferably, the non-ionic surfactant comprises compounds produced by the condensation of simple alkylene oxides with an aliphatic or alkyl-aromatic hydrophobic compound having a reactive hydrogen atom.

More preferably, the non-ionic surfactant comprises
- the condensation products of aliphatic alcohols having from 8 to 22 carbon atoms in either straight or branched chain configuration with ethylene oxide, such as a coconut alcohol/ethylene oxide condensates having from 2 to 15 moles of ethylene oxide per mole of coconut alcohol;
- condensates of alkylphenols having C₆-C₁₅ alkyl groups with 5 to 25 moles of ethylene oxide per mole of alkylphenol;
- polyoxyethylene sorbitan fatty acid esters, for example polyoxyethylene sorbitan C₆₋₂₄ fatty acid esters;
or a mixture thereof.

Even more preferably, the non-ionic surfactant comprises ethoxylated C₈-C₁₆ alkyl alcohols mixed with C₅-C₂₀ alkyl polyglucosides.

Ethoxylated alkyl alcohols are preferably ethoxylated C₈-C₁₂ alkyl alcohols, whereby yet more preferably the average degree of ethoxylation is between 5 and 8. An example of particularly effective (and therefore preferred) surfactants are ethoxylated C₉-C₁₁ alkyl alcohols with an average degree of ethoxylation of 8, including for instance the commercially surfactant Neodol 91-8.

Preferred alkyl polyglucosides are represented by formula of RO - (G)ₙ, wherein R is a branched or straight chain alkyl group which may be saturated or unsaturated, G is a saccharide group, and the degree of polymerisation, n, may have a value of from 1 to 10; Preferably R has a mean alkyl chain length of from C₅ to C₂₀, G is selected from C₅ or C₆ monosaccharide residues and n has a value of from 1 to 6; more preferably R has a mean alkyl chain length of from C₆ to C₁₆, G is glucose and n has a value of from 1 to 2. Suitable alkyl polyglucosides include those from the Glucopon^{®} range, e.g. Glucopon^{®} 425 N from BASF.

The non-ionic surfactant preferably comprises at least 10%, more preferably at least 25% and even more preferably from 40 to 100% of ethoxylated alkyl alcohols by weight of the total non-ionic surfactant.

To have a suitable cleaning capability and/or capability to alter the hard surface to be hydrophobic, the hard surface treatment composition preferably comprises non-ionic surfactant in amount of from 0.01 to 15%, more preferably from 0.1 to 10%, even more preferably from 0.3 to 8% and still even more preferably from 0.8 to 6% and most preferably from 1.2 to 4.8% by weight of the total composition.

By "aminosilicone" is meant a silicone containing at least one primary, secondary or tertiary amine group, or a quaternary ammonium group. Preferably, the aminosilicone is silicone having no quaternary ammonium group. Preferably, the primary, secondary tertiary amine group, and/or quaternary ammonium group is carried by side or pendant group carried by the polymeric backbone. Suitable aminosilicone is described in EP 455,185 (Helene Curtis).

The non-volatile aminosilicone suitable for use in the present invention may be represented by the formula of:

R¹ₐR₃₋ₐSi-(O-Si R₂)ₘ-(O-Si R_{b}R¹_{2-b})ₙ-O-SiR¹ₐR₃₋ₐ (I)

where:
each R is independently hydrogen, phenyl, OH or a C₁-C₁₀ alkyl group,
preferably R is OH or a C₁-C₆ alkyl group and more preferably a C₁-C₆ alkyl group, and most preferably a CH₃ group;
each a is independently an integer from 0 to 3, preferably each a is 0;
each b is an integer from 0 to 1, b may be 2 when a is not 0, preferably b is 0 or 1 and most preferably b is 1;
m and n are integers whereby the sum of n+m ranges from 1 to 3,500, preferably from 10 to 2000 and more preferably from 100 to 1200;
each R¹ is independently a monovalent radical of formula -(CR²₂)ₓL,
where:
   each R² is independently H, OH, OCH₃ or C₁₋₄ alkyl, preferably each R² is independently H, or C₁₋₄ alkyl;
   x is integer from 1 to 10, preferably from 2 to 6;
   and L is an amine or a quaternized amine represented by one of the following groups:

      -NR³-(CR²₂)_{y}-N(R³)₂ (1)

      -N(R³)₂ (2)

      -[N(R³)-(CR²₂)_{y}]_{z} -N(R³)₂, (3)

      -N⁺(R³)₃A⁻ (4)

      -N(R³)-(CR²₂)_{y} -N⁺(R³)₃A⁻, (5)

      -[N(R³)-(CR²₂)_{y}]_{z} -N⁺(R³)₃A⁻, (6)

      -[N⁺(R³)₂-(CR²₂)_{y}]_{z} -N (R³)₂(A⁻)^{z}, (7)

      -[N⁺(R³)-(CR²₂)_{y}]_{z} -N⁺(R³)₃(A⁻)^{z+1}, (8)
   where:
      each R² is independently H, OH, OCH₃ or C₁₋₄ alkyl;
      each R³ is independently hydrogen, phenyl, benzyl or a C₁ to C₁₂ alkyl;
      each y is independently an integer from 1 to 4;
      each z is independently an integer from 1 to 5; and
      each A⁻ is independently anion, preferably fluoride, chloride, bromide or iodide anion.

Preferably, in formula (I), each R is independently OH, or C₁-C₄ alkyl group; each a is 0; b is 1 or 2; m and n are integers wherein the sum of n+m ranges from 30 to 2,000; each R¹ is independently a monovalent radical of formula -(CR²₂)ₓL, where each R² is independently H, or C₁₋₄ alkyl, x is integer from 1 to 4, and L is an amine or a quaternized amine represented by groups (1) to (8), where each R² is independently H, or C₁₋₄ alkyl; each R³ is independently hydrogen, or a C₁ to C₄ alkyl; each y is independently an integer from 1 to 4; each z is independently an integer from 1 to 3; and each A⁻ is independently anion.

More preferably, in formula (I), each R is methyl; each a is 0; b is 1; m and n are integers wherein the sum of n+m ranges from 50 to 1,500; each R¹ is independently a monovalent radical of formula -(CH₂)ₓL, wherein x is integer from 1 to 4, and L is an amine or a quaternized amine represented by groups (1) to (8), where each R² is independently H, or C₁₋₄ alkyl; each R³ is independently hydrogen, or a C₁ to C₄ alkyl; each z is independently an integer from 1 to 3; each y is independently an integer from 1 to 4; and each A⁻ is independently anion.

Most preferably, in formula (I), each R is methyl; each a is 0; b is 1; m and n are integers wherein the sum of n+m ranges from 80 to 1,000; each R¹ is independently a monovalent radical of formula -(CH₂)₂L, wherein L is an amine or a quaternized amine represented by -NR³-(CH₂)₂-N(R³)₂ or -N(R³)-(CH₂)₂-N(R³)₃A⁻, where each R³ is independently hydrogen, or methyl; and A⁻ is chloride anion.

The mole % amine functionality of the aminosilicone is preferably at least 0.05%, more preferably in the range of from 0.1 to 8%, even more preferably from 0.3 to 6% and most preferably from 0.5 to 4%.

Preferably, the aminosilicone is amino functional polysiloxanes having the CTFA designation "amodimethicone".

The weight-average molecular weight of the non-volatile aminosilicone is preferably from 2,000 to 2,000,000, more preferably from 8,000 to 800,000, even more preferably from 20,000 to 400,000, and most preferably from 50,000 to 150,000 Daltons. The weight-average molecular weight may be measured by following the standard of ASTM D4001-2013.

The non-volatile aminosilicone suitable for use in the compositions of the invention preferably has a D_{3,2} average particle diameter (Sauter mean diameter) in the composition of from 10 nm to 20 micron, more preferably from 20 nm to 5 micron, even more preferably from 30 to 2 micron, still even more preferably from 40 nm to 800 nm, and most preferably from 50 to 200 nm.

Preferably, the non-volatile aminosilicone is emulsified by emulsifier selected from cationic emulsifier, non-ionic emulsifier, anionic emulsifier, or a mixture thereof. More preferably, the emulsifier comprises cationic emulsifier, non-ionic emulsifier, or a mixture thereof. Even more preferably the emulsifier comprises non-ionic emulsifier.

Non-ionic emulsifier is preferably selected from polyoxyethylene alkyl ethers, polyoxyethylene alkyl phenyl ethers, alkylglucosides, polyoxyethylen, fatty acid esters, sorbitan fatty acid esters, polyoxyethylene sorbitan fatty acid esters, poly(oxyethylene)-poly(oxypropylene)-poly(oxyethylene) tri-block copolymer (also referred to as poloxamers), poly(oxyethylene)-poly(oxypropylene) block copolymer derived from the sequential addition of propylene oxide and ethylene oxide to ethylene diamine (also referred to as poloxamines), or mixtures thereof. More preferably the non-ionic emulsifier is selected from polyoxyethylene alkyl ethers, polyoxyethylene alkyl phenyl ethers, alkylglucosides, fatty acid esters, sorbitan fatty acid esters, polyoxyethylene sorbitan fatty acid esters, or mixtures thereof.

Cationic emulsifier is preferably a quaternary ammonium salt. More preferably, the cationic surfactants have the formula N⁺R⁴R⁵R⁶R⁷ X⁻, wherein R⁴, R⁵, R⁶, and R⁷ are independently (C₁ to C₃₀) alkyl or benzyl and X is hydroxide or halogen. Preferably, one, two or three of R⁴, R⁵, R6, and R⁷ are independently (C₄ to C₃₀) alkyl and the other R⁴, R⁵, R6, and R⁷ group or groups are (C₁-C₆) alkyl or benzyl and X is hydroxide, chlorine or bromine. Even more preferably, the cationic surfactants has the formula of N⁺CH₃)₂R⁸R⁹X⁻, where R⁸, and R⁹ are independently (C₁₂ to C₃₀) alkyl and X is hydroxide, chlorine or bromine, and most preferably the cationic is C₁₂-C₃₀ alkyltrimethylammonium chloride.

The viscosity of the non-volatile aminosilicone itself (not the emulsion or the final hard surface treatment composition) is typically from 20 to 2,000,000 cSt (centi-Stokes) at 25 °C, preferably from 500 cSt to 800,000 cSt, more preferably from 2,400 to 80,000 cSt, even more preferably from 4,000 to 15,000 cSt, and most preferably from 8,000 to 15,000 cSt.

Preferably, the non-volatile aminosilicone is present in the composition in amount from 0.01 to 20% by weight of the composition, more preferably from 0.1 to 15%, even more preferably from 0.2 to 9%, still even more preferably from 0.4 to 6%, most preferably from 0.5 to 3% by weight of the total composition.

Preferably, the non-volatile aminosilicone accounts for at least 25% by weight of the total non-volatile silicone in the composition, more preferably from 40% to 100%, even more preferably from 75% to 100% by weight of the total non-volatile silicone in the composition.

To have a better surface appearance and/or hydrophobicity, the weight ratio of the nonionic surfactant to the non-volatile aminosilicone is preferably from 1:20 to 50:1, more preferably from 1:10 to 20:1, even more preferably from 1:5 to 8:1, and most preferably from 0.4:1 to 4:1.

The hard surface treatment composition of the present invention preferably comprises at least 30% of water by weight of the composition. More preferably, the composition comprises at least 50%, even more preferably from 70 to 99%, still even more preferably from 77 to 97% and most preferably from 84 and 93% of water by weight of the composition.

The composition preferably comprises organic solvents selected from C₁₋₈ alcohol, ether having 2 to 16 carbon atoms, ester of C₂₋₂₄ organic acid, C₆₋₁₈ cyclic terpene, and a mixture thereof. More preferably the composition comprises organic solvents selected from C₂₋₈ alcohol, ether having total 2 to 16 carbon atoms, ester having total 2 to 16 carbon atoms, C₆₋₁₆ cyclic terpene, and a mixture thereof. Even more preferably the composition comprises organic solvents selected from C₂₋₈ alcohol, ether having total 2 to 12 carbon atoms, ester having total 2 to 12 carbon atoms, C₆₋₁₂ cyclic terpene, and a mixture thereof.

Preferably the composition comprises ethanol, isopropyl alcohol, n-butanol, iso-butanol, n-butoxypropanol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol, soybean oil methyl ester, limonene or a mixture thereof. More preferably the composition comprises ethanol, isopropyl alcohol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol and C₂₋₈ acid, soybean oil methyl ester, limonene or a mixture thereof. Even more preferably the composition comprises ethanol, isopropyl alcohol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, limonene or a mixture thereof. Most preferably the composition comprises isopropyl alcohol, dipropylene glycol monobutyl ether, propylene glycol monomethyl ether, propylene glycol monopropyl ether, or a mixture thereof. The organic solvent may be present in the composition in a concentration of 0 to 20%, preferably 0.5-15% by weight of the composition.

The composition preferably comprises abrasive particle, more preferably in amount of 2 to 40%, even more preferably from 5 to 15% by weight of the composition. The abrasive particles can be of any suitable material, both organic and inorganic but preferably comprises inorganic abrasive particles. More preferably the abrasive comprises particles made of zeolites, calcites, dolomites, feldspar, silicas, silicates, other carbonates, aluminas, bicarbonates, borates and sulphates. Even more preferably the composition comprises calcite, silica particles, olive stone fragments, or a mixture thereof. Preferably, the abrasive particles preferably have a volume average median diameter d(0.5) of 150µm or below, more preferably of between 1 to 100 µm, more preferably from 5 to 80 µm and still even more preferably between 10 and 70 µm. Preferably the abrasive particles have sharp edges and an average a particle has at least one edge or surface having concave curvature. More preferably, the particles herein have a multitude of sharp edges and each particle has at least one edge or surface having concave curvature. The sharp edges of the particles are defined by edges having a tip radius below 20 pm, preferably below 8 pm, most preferably below 5 pm. The tip radius is defined by the diameter of an imaginary circle fitting the 15 curvature of the edge extremity.

The composition may comprise from 0.2 to 1.2% of thickener by weight of the composition. This provides the optimum rheological properties of the composition. Suitable thickeners include the modified celluloses for example hydroxyethyl cellulose.

The hard surface cleaning composition according to the invention may further comprise dyes, perfume, and/or preservatives. If present, the amount may be from 0.001 to 5% by weight of the composition.

Preferably, the composition has a pH value of no greater than 8.5 when the non-volatile aminosilicone comprises aminoethylaminopropyl poly(dimethylsiloxane). More preferably the composition has a pH value of no greater than 8.5 when the non-volatile aminosilicone does not comprises quaternary ammonium silicone. The composition preferably has a pH value of no greater than 11.8, more preferably no greater than 8.5, even more preferably between 1 and 8, still even more preferably from 3 to 8. The pH values referred to herein are measured at a temperature of 25 °C.

In general, the hard surface treatment composition of the invention may have any appearance, ranging from opaque to fully transparent. However, the composition is preferably at least partially transparent or translucent, more preferably transparent. By at least partially transparent or translucent is meant that a 1 cm thick sample of the composition transmits at least 20%, preferably at least 50%, of light having wavelength of 460 nm. By transparent is meant that a 1 cm thick sample of the composition transmits at least 70%, preferably at least 90%, of light having wavelength of 460 nm.

The composition of the present invention may be produced by any convenient way. However it is preferred that the process for preparing the composition comprises the steps in sequence of:
a) emulsifying the non-volatile aminosilicone by emulsifier to form an emulsion;
b) combining the emulsified aminosilicone with the non-ionic surfactant; and
c) recovering the hard surface treatment composition,
wherein the non-volatile aminosilicone accounts for at least 15% by weight of the total non-volatile silicones in the composition, and the emulsifier is different from the non-ionic surfactant.

Preferably, the emulsion comprises at least 10% of non-volatile aminosilicone by weight of the emulsion, more preferably from 15 to 90%, even more preferably from 20% to 80% by weight of the emulsion.

Preferably, step (a) is carried out at least half an hour before step (b), more preferably at least 1 day, even more preferably from 1 week to 5 years before step (b).

The composition may be packed in any form, but preferably is packaged as a conventional hard surface treatment or cleaning product. The preferred packaging is a spray applicator. Pump dispersers (whether spray or non-spray pumps) and pouring applications (bottles etc) are also possible. It is also possible to impregnate a wipe with the composition.

When treating a hard surface by the composition, any general way for treating a hard surface is acceptable. Typically, the way for treating a hard surface by the composition is spraying the composition onto the hard surface, or wiping the hard surface by wipe impregnated with the composition, or pouring the composition onto the hard surface, or combination thereof. Preferably, the way for treating a hard surface is spraying the composition onto a hard surface, and/or wiping a hard surface by wipe impregnated with the composition. When spraying is employed for treating a hard surface, there is no limitation how the composition is sprayed. Typically, a spraying bottle for hard surface cleaning product is favourable. When wiping is employed for treating a hard surface, wipe including woven or nonwoven cloth, natural or synthetic sponges or spongy sheets, "squeegee" materials, paper towel, or the like is suitable. The wipe may be impregnated dry, or more preferably in wet form.

Thus, after treating the surface with the composition, the method for treating a hard surface may optionally further comprises the steps of allowing soil and/or stains to deposit. Thus, the soil or stains will be easily removed when the hard surface is subsequently cleaned according to the method of this invention. Meanwhile, the composition of the invention is also preferably applied to the hard surface during the subsequent cleaning. Optionally, treating of a hard surface with the composition may be followed by a rinsing step, preferably with water.

Therefore a most preferred method for treating a hard surface comprises:
I. forming the hydrophobic coating on the surface;
II. allowing soil and/or stains to deposit on the coating; and then
III. cleaning the surface to remove the soil and/or stains.

The soils and stains of present invention may comprise all kinds of soils and stains generally encountered in the household, either of organic or inorganic origin, whether visible or invisible to the naked eye, including soiling solid debris and/or with bacteria or other pathogens. Specifically the method and compositions according to the invention may be used to treat surface susceptible to fatty or greasy soil and stains.

The present invention may also deliver other benefits such as long last cleaning, less effort for cleaning, less surface corrosion, less noise during cleaning, surface shine, surface smoothness, less damage and/or scratch resistance. Further aspects of the present invention comprise methods for obtaining one or more these other benefits by applying the composition of the present invention to a hard surface and/or use the composition for delivering any one more such benefits mentioned in this invention. The following examples are provided to facilitate an understanding of the present invention. The examples are not provided to limit the scope of the claims.

### Examples

### Example 1

This example demonstrates the effect of types of surfactant in samples on the surface wettability of hard surface treated by the samples. Only Sample 2 illustrates the invention currently claimed.

**Table 1**

| Chemical name | Trade name | Samples (active% by weight) | | | |
|---|---|---|---|---|---|
| | | 1 | 2 | A | B |
| Primary alcohol ethoxylate | Neodel 91-5 ex Shell | 2.00 | - | - | - |
| Alkyl polyglycoside C8-C16 | Glucopon^{®} 425 N from BASF | - | 2.00 | - | - |
| N,N-Dimethyl-N-dodecylglycine betaine N-(Alkyl C₁₀-C₁₆)-N,N-dimethylglycine betaine | Empigen^{®} BB from Sigma-Aldrich | - | - | 2.00 | - |
| Sodium Lauryl Ether Sulfate | Texapon N70 from Cognis | - | - | - | 2.00 |
| Amodimethicone | Dow Corning 2-8168 microemulsion | 1.00 | 1.00 | 1.00 | 1.00 |
| De-ionized water | - | To 100 | To 100 | To 100 | To 100 |
| | | | | | |
| Contact angle (°) | | 96.5±2.9 | 96.4±0.3 | 76.0±0.8 | 47.0±3.5 |

The samples were prepared by mixing the ingredients according to the formulation in Table 1 and stirring for 10 minutes (200 rpm).

Glass slides were chosen as model substrate. Pipette was used to drop the composition on the glass slide (2.5 cm X 7 cm) in a controlled amount of 0.15 ml. After the dispersion was dropped on the target surface, the tip of the pipette was used to spread the composition on the surface to ensure uniform coating. After application of the composition on the substrate, the solvent was allowed to evaporate at room temperature (25 °C).

Drop shape analysis system 100 (DSA 100, Krüss) was used to measure the contact angles at 25°C. 5 µl of water droplets were employed and the average values and standard derivations of contact angles were obtained from at least 3 droplets. The results for contact angels of glass slides after treatment were shown in last row of Table 1.

The data show that the compositions containing non-ionic surfactant and non-volatile aminosilicone generated hydrophobic coating on hard surface. In contrast, compositions containing non-volatile aminosilicone and anionic surfactant, or containing non-volatile aminosilicone and amphoteric surfactant did not yield hydrophobic coating.

### Example 2

This example demonstrates that the types of silicones in compositions on the surface wettability. Samples 3 and 4 do not illustrate the invention currently claimed.

**Table 2**

| Chemical name | Trade name | Samples (active% by weight) | | |
|---|---|---|---|---|
| | | 3 | 4 | C |
| Primary alcohol ethoxylate | Neodel 91-5 ex Shell | 2.00 | 2.00 | 2.00 |
| Amodimethicone (and) C12-14 sec-Pareth-7 (and) C12-14 sec-Pareth-5 | Dow Corning 2-8168 microemulsion | 1.00 | - | - |
| Amodimethicone and Trideceth-12 and Cetrimonium Chloride | Dow Corning 949 cationic emulsion | - | 1.00 | - |
| | Dow Corning 5-7134 emulsion | - | - | 1.00 |
| De-ionized water | - | To 100 | To 100 | To 100 |
| | | | | |
| Contact angle (°) | | 96.5±2.9 | 91.2±0.3 | 72.4±3.2 |

The experiments were identical to those of Example 1.

Dow Corning 5-7134 emulsion contains 63% of dimethicone and 7% of amodimethicone.

As can be seen in the results in Table 2, it was unexpectedly found that the compositions containing 100% of aminosilicone by weight of the total non-volatile silicone yielded hydrophobic coating on hard surface. In contrast, the composition containing 10% of aminosilicone by weight of the total non-volatile silicone did not generate hydrophobic coating on hard surface.

### Example 3

This example demonstrates the effect of emulsifier on surface wettability of coating on hard surface by the compositions. Sample 5 illustrates the invention currently claimed.

**Table 3**

| Chemical name | Trade name | Samples (active% by weight) | |
|---|---|---|---|
| | | 5 | D |
| Alkyl polyglycoside C8-C16 | Glucopon^{®} 425 N from BASF | 2.5 | 2.5 |
| Amodimethicone (and) C12-14 sec-Pareth-7 (and) C12-14 sec-Pareth-5 | Dow Corning 2-8168 microemulsion | 1.0 | - |
| amino methoxy functional polydimethylsiloxane | Dow Corning DC 531 Fluid | - | 1.0 |
| Propylene Glycol Methyl Ether (PGME) | - | 1.0 | 1.0 |
| De-ionized water | - | To 100 | To 100 |
| | | | |
| Contact angle (°) 95.3±0.9 76.6±1.8 | | | |

The experiments were identical to those of Example 1 except that 15 minutes of homogenization was followed by stirring for the preparation of sample D.

In sample D, the aminosilicone was emulsified by the non-ionic surfactant. The data in Table 3 show that the composition containing aminosilicone which was emulsified by emulsifier different from the non-ionic surfactant yielded a hydrophobic coating.

### Example 4

This example demonstrates the benefit of oil repellancy by the present invention

**Table 4**

| Chemical name | Trade name | Samples (active% by weight) |
|---|---|---|
| | | 6 |
| Alkyl polyglycoside C8-C16 | Glucopon^{®} 425 N from BASF | 2.500 |
| Amodimethicone (and) C12-14 sec-Pareth-7 (and) C12-14 sec-Pareth-5 | Dow Corning 2-8168 microemulsion | 1.000 |
| Propylene Glycol Methyl Ether (PGME) | - | 1.000 |
| polyether modified silicone | - | 0.125 |
| Fragrance | - | 0.050 |
| De-ionized water | - | To 100 |

The preparation of the composition in Table 4 and treatment of glass slides, ceramic tile, mirror, and stainless steel was similar as described in Example 1.

Oil contact angle was measured by drop shape analysis system 100 (DSA 100, Krüss) at 25°C. 20 µl of soybean oil droplets were employed and the average value of contact angles was obtained from at least 3 droplets. The contact angles of treated glass and untreated glass were 62.7 ± 4.3° and 16.1 ± 0.6° respectively, manifesting that the oil repellancy had been improved significantly by the coating.

The speed and residue when soybean oil slid off from the hard surface were also measured. The treated and untreated substrates were tilted at a certain angle (5° for ceramic tile and mirror and 10° for stainless steel) and at fixed position. 2 ml of blue dyed soybean oil (0.1% of oil blue dye) was placed into the central area. The mass of the oil collected was monitored and recorded by a computer connected balance. The masses of the collected are shown in Table 5.

**Table 5**

| Substrate | Mass of collected oil After 20 seconds (g) | | Mass of collected oil After 3 minutes (g) | |
|---|---|---|---|---|
| | Coated | Uncoated | Coated | Uncoated |
| Ceramic tile | 1.42 | 0.43 | 1.61 | 1.20 |
| Mirror | 1.43 | 0.61 | 1.77 | 1.29 |
| Stainless steel | 1.45 | 0.82 | 1.57 | 1.44 |

It was found that the mass of collected oil generally did not change after 2.5 minutes for all three types of substrates. As can be seen in Table 5, the soybean oil slid off from the untreated substrates much quicker than from the untreated substrates. Furthermore, the oil residue on treated substrates was less than that on the untreated substrates.

### Example 5

This example demonstrates the effect of types of silicones on the surface wettability of hard surface treated by the samples. Samples 7 to 9 do not illustrate the invention currently claimed.

**Table 6**

| Ingredient | Samples (active% by weight) | | | | |
|---|---|---|---|---|---|
| | 7 | 8 | 9 | E | F |
| Neodel 91-8 from Shell | 2.0 | 2.0 | 2.0 | 2.0 | 2.0 |
| Dow corning^{®} 5-7113 silicone quat microemulsion | 2.0 | 2.0 | 2.0 | - | - |
| Dow Corning^{®} 2-8168 microemulsion | - | - | - | - | 2.0 |
| Citric acid | q.s. | - | - | 2.0 | - |
| Sodium hydroxide | - | q.s. | q.s. | q.s. | q.s. |
| De-ionized Water | To 100 | To 100 | To 100 | To 100 | To 100 |
| | | | | | |
| pH | 2.79 | 7.1 | 10.98 | 12.01 | 10.99 |
| Contact angle (°) | 84.1±2.8 | 88.8±5.0 | 87.9±4.2 | 45.2±1.5 | 61.1±7.3 |

The samples were prepared according to the formulation in Table 6. Citric acid and sodium hydroxide were employed to adjust the pH value of the composition to the desired value.

The experiments were conducted in a similar manner with those of Example 1.

The pH value of the samples and the contact angle of the generated coatings were listed in the last two rows in Table 6. As can be seen from the results, the composition of the present invention is capable of generating hydrophobic coatings.

### Example 6

This example demonstrates the effect of types of surfactants on the surface wettability of hard surface treated by the samples. Samples 4 and 6 do not illustrate the invention currently claimed. The preparation of samples, coating on hard surface and measurement of contact angles were similar with that of Example 1.

**Table 7**

| Ingredient | | Samples (active% by weight) | | |
|---|---|---|---|---|
| Chemical name | Product name | 4 | 5 | 6 |
| Primary alcohol ethoxylate | Neodel 91-8 from Shell | 2.0 | - | - |
| Alkyl polyglycoside C8-C16 | Glucopon^{®} 425 N from BASF | - | 2.0 | - |
| Sodium Lauryl Ether Sulfate | Texapon N70 from Cognis | - | - | 2.0 |
| Silicone Quaternium-16 | Dow corning^{®} 5-7113 silicone quat microemulsion | 1.0 | 1.0 | 1.0 |
| De-ionized Water | - | To 100 | To 100 | To 100 |
| | | | | |
| Contact angle (°) | | 84.0±1.5 | 86.1±0.4 | 54.8±6.8 |

As can be seen from Table 7, the composition containing non-ionic surfactant and aminosilicone can yield a hydrophobic coating on hard surface. In contrast, the composition containing anionic surfactant and aminosilicone did not yield hydrophobic coating.

## Claims

1. A hard surface treatment composition comprising:
a) non-ionic surfactant; and
b) non-volatile aminosilicone emulsified by emulsifier,
wherein:
i. the non-volatile aminosilicone accounts for at least 15% by weight of the total non-volatile silicones in the composition;
ii. the emulsifier is different from the non-ionic surfactant;
iii. the composition has a pH value of no greater than 11.8;
iv. the composition has a pH value of no greater than 8.5 when the non-volatile aminosilicone comprises aminoethylaminopropyl poly(dimethylsiloxane), and
v. the non-ionic surfactant comprises alkyl polyglucosides.

2. The composition according to claim 1 wherein the non-ionic surfactant is present in amount of 0.1 to 10% by weight of the composition, preferably 0.8 to 6% by weight of the composition.

3. The composition according to claim 1 or 2 wherein the non-ionic surfactant comprises C₅-C₂₀ alkyl polyglucosides.

4. The composition according to any one of the preceding claims wherein the aminosilicone comprising nitrogen in amount of at least 0.05% by weight of aminosilicone, preferably 0.1 to 8% by weight of the aminosilicone.

5. The composition according to any one of the preceding claims wherein the aminosilicone is amodimethicone.

6. The composition according to any one of the preceding claims wherein the aminosilicone has a weight average molecular weight of 2,000 to 2,000,000, preferably from 8,000 to 800,000, more preferably from 20,000 to 400,000, and even more preferably from 50,000 to 150,000 Daltons.

7. The composition according to any one of the preceding claims wherein the aminosilicone has a D_{3,2} average particle diameter of from 10 nm to 20µm, preferably from 30 nm to 2 µm.

8. The composition according to any one of the preceding claims wherein the aminosilicone is present in amount of from 0.01 to 15% by weight of the composition, preferably from 0.5 to 3% by weight of the composition.

9. The composition according to any one of the preceding claims wherein the weight ratio of non-ionic surfactant to the aminosilicone is from 1:10 to 20:1 more preferably from 1:5 to 8:1.

10. The composition according to any one of the preceding claims wherein the emulsifier comprises non-ionic emulsifier, cationic emulsifier, anionic emulsifier, or a mixture thereof, preferably comprise non-ionic emulsifier, cationic emulsifier or a mixture thereof.

11. The composition according to any one of the preceding claims wherein the composition comprises organic solvents selected from C₂₋₈ alcohol, ether having total 2 to 16 carbon atoms, ester having total 2 to 16 carbon atoms, C₆₋₁₆ cyclic terpene, and a mixture thereof, preferably the composition comprises ethanol, isopropyl alcohol, dipropylene glycol, diethylene glycol monobutyl ether, dipropylene glycol monobutyl ether, propylene glycol monomethyl ether, propylene glycol monopropyl ether, methyl ester of caprylic acid, methyl ester of heptylic acid, dimethyl-2-methyl glutarate, esters of polyglycerol and C₂₋₈ acid, soybean oil methyl ester, limonene, or a mixture thereof.

12. The composition according to any one of the preceding claims wherein the composition has a pH value of no greater than 8.5.

13. A process for preparing the composition of any one of the preceding claims, the process comprises the step of:
a) emulsifying the non-volatile aminosilicone by emulsifier; and
b) combining the emulsified non-volatile aminosilicone with non-ionic surfactant.

14. A method for forming a hydrophobic coating on a surface, the method comprising applying the composition of any one of the claims 1 to 11 to the surface and drying the composition to yield the hydrophobic coating.

## Patentansprüche

1. Zusammensetzung zur Behandlung harter Oberflächen, umfassend:
a) nichtionisches Tensid; und
b) nichtflüchtiges Aminosilikon, emulgiert durch Emulgator,
wobei
i. das nichtflüchtige Aminosilikon mindestens 15 Gewichts-% der gesamten nichtflüchtigen Silikone in der Zusammensetzung ausmacht;
ii. sich der Emulgator von dem nichtionischen Tensid unterscheidet;
iii. die Zusammensetzung einen pH-Wert von nicht mehr als 11,8 aufweist;
iv. die Zusammensetzung einen pH-Wert von nicht mehr als 8,5 aufweist, wenn das nichtflüchtige Aminosilikon Aminoethylaminopropylpoly(dimethylsiloxan) umfasst und
v. das nichtionische Tensid Alkylpolyglucoside umfasst.

2. Zusammensetzung nach Anspruch 1, wobei das nichtionische Tensid in einer Menge von 0,1 bis 10 Gewichts-% der Zusammensetzung, vorzugsweise von 0,8 bis 6 Gewichts-% der Zusammensetzung, vorliegt.

3. Zusammensetzung nach Anspruch 1 oder 2, wobei das nicht-ionische Tensid C₅-C₂₀-Alkylpolyglucoside umfasst.

4. Zusammensetzung nach irgendeinem der vorhergehenden Ansprüche, wobei das Aminosilikon Stickstoff in einer Menge von mindestens 0,05 Gewichts-% des Aminosilikons, vorzugsweise von 0,1 bis 8 Gewichts-% des Aminosilikons, umfasst.

5. Zusammensetzung nach irgendeinem der vorhergehenden Ansprüche, wobei das Aminosilikon Amodimethicone ist.

6. Zusammensetzung nach irgendeinem der vorhergehenden Ansprüche, wobei das Aminosilikon ein gewichtsmittleres Molekulargewicht von 2.000 bis 2.000.000, vorzugsweise von 8.000 bis 800.000, bevorzugter von 20.000 bis 400.000, und noch bevorzugter von 50.000 bis 150.000 Daltons, aufweist.

7. Zusammensetzung nach irgendeinem der vorhergehenden Ansprüche, wobei das Aminosilikon einen durchschnittlichen Teilchendurchmesser D_{3,2} von 10 nm bis 20 µm, vorzugsweise von 30 nm bis 2 µm, aufweist.

8. Zusammensetzung nach irgendeinem der vorhergehenden Ansprüche, wobei das Aminosilikon in einer Menge von 0,01 bis 15 Gewichts-% der Zusammensetzung, vorzugsweise von 0,5 bis 3 Gewichts-% der Zusammensetzung, vorliegt.

9. Zusammensetzung nach irgendeinem der vorhergehenden Ansprüche, wobei das Gewichtsverhältnis des nichtionischen Tensids zu dem Aminosilikon von 1:10 bis 20:1, bevorzugter von 1:5 bis 8:1, beträgt.

10. Zusammensetzung nach irgendeinem der vorhergehenden Ansprüche, wobei der Emulgator nichtionischen Emulgator, kationischen Emulgator, anionischen Emulgator oder eine Mischung davon, vorzugsweise nichtionischen Emulgator, kationischen Emulgator oder eine Mischung davon, umfasst.

11. Zusammensetzung nach irgendeinem der vorhergehenden Ansprüche, wobei die Zusammensetzung organische Lösungsmittel umfasst, ausgewählt aus C₂₋₈-Alkohol, Ether mit insgesamt 2 bis 16 Kohlenstoffatomen, Ester mit insgesamt 2 bis 16 Kohlenstoffatomen, cyclischem C₆₋₁₆-Terpen und einer Mischung davon, wobei die Zusammensetzung vorzugsweise Ethanol, Isopropylalkohol, Dipropylenglycol, Diethylenglycolmonobutylether, Dipropylenglycolmonobutylether, Propylenglycolmonomethylether, Propylenglycolmonopropylether, Methylester von Caprylsäure, Methylester von Heptylsäure, Dimethyl-2-methylglutarat, Ester von Polyglycerin und C₂₋₈-Säure, Sojabohnenölmethylester, Limonen oder eine Mischung davon umfasst.

12. Zusammensetzung nach irgendeinem der vorhergehenden Ansprüche, wobei die Zusammensetzung einen pH-Wert von nicht mehr als 8,5 aufweist.

13. Verfahren zur Herstellung der Zusammensetzung nach irgendeinem der vorhergehenden Ansprüche, wobei das Verfahren den Schritt umfasst:
a) Emulgieren des nichtflüchtigen Aminosilikons durch Emulgator; und
b) Kombinieren des emulgierten nichtflüchtigen Aminosilikons mit nichtionischem Tensid.

14. Verfahren zur Bildung einer hydrophoben Beschichtung auf einer Oberfläche, wobei das Verfahren das Aufbringen der Zusammensetzung nach irgendeinem der Ansprüche 1 bis 11 auf die Oberfläche und das Trocknen der Zusammensetzung, um die hydrophobe Beschichtung zu ergeben, umfasst.

## Revendications

1. Composition de traitement de surface dure comprenant :
a) un tensioactif non-ionique ; et
b) un aminosilicone non-volatil émulsifié par un émulsifiant, dans laquelle :
i. l'aminosilicone non-volatil compte pour au moins 15 % en masse de tous les silicones non-volatils dans la composition ;
ii. l'émulsifiant est différent du tensioactif non-ionique ;
iii. la composition présente une valeur de pH d'au plus 11,8 ;
iv. la composition présente une valeur de pH d'au plus 8,5 lorsque l'aminosilicone non-volatil comprend un aminoéthylaminopropyle poly(diméthylsiloxane), et
v. le tensioactif non-ionique comprend des alkyle polyglucosides.

2. Composition selon la revendication 1, dans laquelle le tensioactif non-ionique est présent dans une quantité de 0,1 à 10 % en masse de la composition, de préférence de 0,8 à 6 % en masse de la composition.

3. Composition selon la revendication 1 ou 2, dans laquelle le tensioactif non-ionique comprend des alkyle polyglucosides en C₅-C₂₀.

4. Composition selon l'une quelconque des revendications précédentes, dans laquelle l'aminosilicone comprend de l'azote dans une quantité d'au moins 0,05 % en masse d'aminosilicone, de préférence de 0,1 à 8 % en masse de l'aminosilicone.

5. Composition selon l'une quelconque des revendications précédentes, dans laquelle l'aminosilicone est l'amodiméthicone.

6. Composition selon l'une quelconque des revendications précédentes, dans laquelle l'aminosilicone présente une masse moléculaire moyenne en masse de 2 000 à 2 000 000, de préférence de 8 000 à 800 000, encore mieux de 20 000 à 400 000, et bien mieux encore de 50 000 à 150 000 Daltons.

7. Composition selon l'une quelconque des revendications précédentes, dans laquelle l'aminosilicone présente un diamètre moyen de particule D_{3,2} de 10 nm à 20 µm, de préférence de 30 nm à 2 µm.

8. Composition selon l'une quelconque des revendications précédentes, dans laquelle l'aminosilicone est présent dans une quantité de 0,01 à 15 % en masse de la composition, de préférence de 0,5 à 3 % en masse de la composition.

9. Composition selon l'une quelconque des revendications précédentes, dans laquelle le rapport de masse de tensioactif non-ionique à l'aminosilicone est de 1:10 à 20:1, encore mieux de 1:5 à 8:1.

10. Composition selon l'une quelconque des revendications précédentes, dans laquelle l'émulsifiant comprend un émulsifiant non-ionique, émulsifiant cationique, émulsifiant anionique, ou un mélange de ceux-ci, comprend de préférence un émulsifiant non-ionique, émulsifiant cationique ou un mélange de ceux-ci.

11. Composition selon l'une quelconque des revendications précédentes, dans laquelle la composition comprend des solvants organiques choisis parmi un alcool en C₂₋₈, éther ayant au total de 2 à 16 atomes de carbone, ester ayant au total de 2 à 16 atomes de carbone, terpène cyclique en C₆₋₁₆, et un mélange de ceux-ci, la composition comprend de préférence de l'éthanol, alcool isopropylique, dipropylèneglycol, monobutyléther de diéthylèneglycol, monobutyléther de dipropylèneglycol, monométhyléther de propylèneglycol, monopropyléther de propylèneglycol, ester méthylique d'acide caprylique, ester méthylique d'acide heptylique, glutarate de diméthyl-2-méthyle, esters de polyglycérol et acide en C₂₋₈, ester méthylique d'huile de soja, limonène, ou un mélange de ceux-ci.

12. Composition selon l'une quelconque des revendications précédentes, dans laquelle la composition présente une valeur de pH d'au plus 8,5.

13. Procédé pour la préparation de la composition selon l'une quelconque des revendications précédentes, le procédé comprend l'étape de :
a) émulsification de l'aminosilicone non-volatil par un émulsifiant ; et
b) combinaison de l'aminosilicone non-volatil émulsifié avec un tensioactif non-ionique.

14. Procédé pour la formation d'un revêtement hydrophobe sur une surface, le procédé comprenant l'application de la composition selon l'une quelconque des revendications 1 à 11 sur la surface et le séchage de la composition pour produire le revêtement hydrophobe.
